# EUROPÄISCHE PATENTSCHRIFT

(11) **EP 2 394 157 B1**
(45) Veröffentlichungstag und Bekanntmachung des Hinweises auf die Patenterteilung: **17.09.2014**
(21) Anmeldenummer: 10705116.1
(22) Anmeldetag: 05.02.2010
(51) Int. Cl.: G01N 27/62, G01N 27/12

(54) **SENSORVORRICHTUNG**
SENSOR DEVICE
DISPOSITIF DE DÉTECTION

(30) Priorität: 06.02.2009 DE 102009007966
(43) Veröffentlichungstag der Anmeldung: 14.12.2011
(73) Patentinhaber: Airbus Defence and Space GmbH, 85521 Ottobrunn (DE)
(72) Erfinder: MÜLLER, Gerhard, 85567 Grafing (DE); KRENKOW, Angelika, 81679 München (DE)
(74) Vertreter: Rasch, Michael
(86) Internationale Anmeldenummer: PCT/EP2010/051428
(87) Internationale Veröffentlichungsnummer: WO 2010/089375

(56) Entgegenhaltungen:
- EP-A1- 0 787 985
- WO-A1-94/16320
- DE-A1- 3 342 230
- GB-A- 2 281 627
- HACKNER A ET AL: "Resistive and surface ionisation response of SnO2 gas sensing layers" SENSORS AND ACTUATORS B, Bd. 146, Nr. 2, 24. November 2009 (2009-11-24), Seiten 433-439, XP027020544 ISSN: 0925-4005 DOI: 10.1016/j.snb.2009.11.029
- RASULEV U K ET AL: "Chromatographic determination of trace amounts of amines using a surface ionization detector" JOURNAL OF CHROMATOGRAPHY A, Bd. 704, Nr. 2, 9. Juni 1995 (1995-06-09), Seiten 473-482, XP004023116 ISSN: 0021-9673 DOI: 10.1016/0021-9673(94)01126-Y
- STANKOVA M ET AL: "Sputtered and screen-printed metal oxide-based integrated micro-sensor arrays for the quantitative analysis of gas mixtures" SENSORS AND ACTUATORS B, Bd. 103, Nr. 1-2, 29. September 2004 (2004-09-29), Seiten 23-30, XP004560555 ISSN: 0925-4005 DOI: 10.1016/J.SNB.2004.02.022

## Beschreibung

Die Erfindung betrifft eine Sensorvorrichtung zur selektiven Ermittlung von geringen Konzentrationen an funktionellen Kohlenwasserstoffen in Gasphase mit mindestens einem beheizbaren resistiven Sensor.

Sensorvorrichtungen werden vielfach im Bereich der Sicherheitstechnik sowie der Prozessüberwachung eingesetzt. Abhängig von den Anforderungen an die Empfindlichkeit können die Kosten, die Größe und die Komplexität der Sensorvorrichtungen erheblich variieren. Insbesondere betragen die Kostenunterschiede zwischen einer einfachen und einer hoch genauen Vorrichtung mehrere Größenordnungen. Gegenwärtig besteht ein erheblicher Kosten- und Leistungssprung zwischen einfachen massenproduzierten Halbleitergassensoren auf der einen Seite und komplexen Analysegeräten, wie beispielsweise Infrarotspektrometer, Gaschromatographen und Massen- bzw. Ionenmobilitätsspektrometer auf der anderen Seite.

Sensoranordnungen, die aus einer Zusammenstellung einfacher Halbleiter- oder Polymersensoren mit verschiedenen Empfindlichkeitsprofilen bestehen, stellen relativ unkomplizierte Gasmessinstrumente dar. Derartige Geräte erzeugen eine Art Geruchsmuster, welches es erlaubt, unterschiedliche Gerüche oder Gaszusammensetzungen zu unterscheiden.. Sie sind jedoch nicht dazu geeignet, genaue Messgrößen zu liefern. Derartige Vorrichtungen haben sich daher nur als geeignet erwiesen, als Rauchmelder o.ä. zu fungieren, da sie beispielsweise Rauchgase von der Umgebungsluft unterscheiden können. Diese Vorrichtungen sind allerdings nicht dazu geeignet, geringe Konzentrationen giftiger Gase vor dem Hintergrund anderer Luftverunreinigungen wie beispielsweise CO, NOₓ, O₃, Alkoholen, Reinigungs- und chemische Lösungsmitteln zu erfassen. Dies erfordert bisher hoch komplexe spektrometrische Instrumente.

Es ist bekannt, beheizbare resistive Halbleitersensoren unter Verwendung von Metalloxiden (MOX) als Sensorfläche zur Messung von Kohlenwasserstoffen zu verwenden. Wenn man eine MOX-Sensorfläche auf Temperaturen im Bereich zwischen 300°C und 500°C erwärmt, adsorbieren O₂-Moleküle aus der Umgebungsluft auf der Sensoroberfläche und bilden O⁻Ionen, indem sie Leitungselektronen des MOX Halbleiters an sich binden. Falls brennbare Moleküle wie beispielsweise H₂ oder Kohlenwasserstoffe in der Umgebungsluft vorhanden sind, adsorbieren diese ebenfalls auf der Sensoroberfläche und können mit den Sauerstoffionen reagieren und so Verbrennungsprodukte wie H₂O, CO oder CO₂ bilden, welche dann als neutrale Moleküle von der Sensorfläche desorbieren. Die an den Sauerstoffionen gebundenen Elektronen werden dem MOX-Leitungsband wieder zugeführt und verändern die Leitfähigkeit der MOX-Schichten und bewirken somit einen Messeffekt. Auf diese Weise kann eine Vielzahl brennbarer Moleküle erfasst werden und durch Änderung der Betriebstemperatur der MOX-Schichten kann eine gewisse Unterscheidung der detektierbaren Gase bewirkt werden. Gleiches kann durch die Verwendung unterschiedlicher MOX-Verbindungen (beispielsweise WO₃ oder In₂O₃Fe) bewirkt werden. Mit derartigen resistiven MOX-Sensoren lässt sich jedoch keine Eingrenzung auf bestimmte funktionelle Kohlenwasserstoffe erreichen, so dass diese Sensoren vor allem auf dem Gebiet der Industrie Sicherheit, z.B. Gasüberwachung und Gas Alarm, Anwendung finden. Dem gegenüber können funktionelle Kohlenwasserstoffe, bei denen Wasserstoffatome durch verschiedene funktionelle Gruppen ersetzt sind, auf diese Weise nicht gezielt detektiert werden. Solche chemisch reaktiven funktionellen Kohlenwasserstoffe sind jedoch häufig giftig, karzinogen oder explosiv und es besteht ein Bedürfnis, derartige Stoffe mit geringem Bauaufwand zu detektieren. Gerade im Security Bereich gilt es Explosivstoffe, Drogen und andere toxische Stoffe vor einem Hintergrund harmloser Luftbestandteile, z.B. an Flughäfen, selektiv zu detektieren.

WO 94/16320 A1 beschreibt eine Sensorvorrichtung zur selektiven Ermittlung von geringen Konzentrationen an toxischen Bestandteilen, wie z.B. Nervengasen, in der Gasphase. JOURNAL OF CHROMATOGRAPHY A, Bd. 704, Nr. 2, 9. Juni 1995, Seiten 473-482, XP004023116, ISSN 0021-9673 offenbart den Nachweis von geringen Konzentrationen von Aminen unter Verwendung eines Oberflächenionisationssensors in Zusammenhang mit einem Flammenionisationssensor. Weiterhin ist ein Oberflächenionisationssensor zum Nachweis von stickstoffhaltigen Verbindungen aus EP 0 787 985 A1 bekannt, während SENSORS AND ACTUATORS B, Bd. 103, Nr. 1-2, 29. September 2004, Seiten 23-30, XP004560555, ISSN 0925-4005 offenbart Arrays von Metalloxidgassensoren.

Es ist also Aufgabe der vorliegenden Erfindung, eine baulich einfache Sensorvorrichtung bereit zu stellen, welche in der Lage ist, geringe Konzentrationen an funktionellen Kohlenwasserstoffen in der Gasphase zu erfassen.

Erfindungsgemäß wird diese Aufgabe durch die im Anspruch 1 angegebenen Merkmale gelöst. Vorteilhafte Weiterbildungen der Erfindung ergeben sich aus den Unteransprüchen sowie der Beschreibung.

Die Erfindung sieht also sinngemäß vor, dass neben einem beheizbaren resistiven Sensor mindestens ein beheizbarer Oberflächenionisationssensor vorhanden ist und die Messwerte der beiden Sensoren parallel ausgewertet werden. Die Erfindung geht davon aus, dass beim Auftreffen von Molekülen mit funktionellen Kohlenwasserstoffen auf die erhitzte Sensorfläche Ladungstransferreaktionen zwischen adsorbierten Gasmolekülen und der Sensoroberfläche stattfinden, welche zur Bildung von Gasionen führen, die sich durch das elektrische Feld zu einer Gegenelektrode des Oberflächenionisationssensors bewegen und somit zu einem messbaren Ausschlag führen. Durch die erfindungsgemäße Anordnung lassen sich vor allem stickstoffhaltige funktionelle Gruppen (Amine, Hydrazine) und auch Phosphine und Arsine erfassen, die alle hochgradig toxisch sind und vor einem relativ großen und variablen Hintergrund von Umgebungsatmosphären mit anderen Verunreinigungen erfasst werden können.

Vorzugsweise ist der Sensor ein Metalloxidsensor (MOX-Sensor), weil dieser gleichzeitig die resistive Messung und die Messung des Ionisationsstroms ermöglicht. Geeignete MOX Materialien sind z.B. MoO₃ und SnO₂. SnO₂ wird als resistives Sensormaterial vielfach verwendet und ist daher weitgehend erforscht und erprobt. Durch die gleichzeitige Erfassung der beiden Messgrößen, Widerstandsänderung und Ionisationsstromänderung bei Gasbeaufschlagung der Sensorfläche, erzielt man wesentlich höhere Gasselektivitäten.

Gemäß noch einer alternativen Ausführungsform der Erfindung kann der resistive Sensor ein Halbleitersensor sein, der Oberflächenionisationssensor kann auch ein Edelmetallsensor sein. Verschiedene Sensormaterialien weisen verschiedene Wechselwirkungen zwischen den Gasmolekülen und den jeweiligen Sensoroberflächen (Adsorption, Ladungstransfer)auf, was zu erhöhten Gasunterscheidungsmerkmalen führt. Gemäß der Erfindung umfasst der Oberflächenionisationssensor eine Sensorfläche sowie eine dazu beanstandete Elektrode, zwischen denen ein elektrisches Feld besteht.

Besonders geeignet zur Messung der funktionellen Kohlenwasserstoffe ist es, wenn die Sensorfläche des Oberflächenionisationssensors aus einer Metalloxidschicht (MOX) besteht, weil diese bei hohen Temperaturen und Atmosphärenbedingungen stabil ist und weil deren Eigenschaften aufgrund ihrer resistiven Verwendung vielseitig untersucht sind. Alternativ kann die Sensorfläche auch aus einem anderen Halbleitermaterial, insbesondere GaN, AlN, SiC, Diamant, oder einem Edelmetall, insbesondere Pt, Pd, Re, oder Kombinationen daraus bestehen. Dies hat den Vorteil, dass verschiedene Sensormaterialien sich durch unterschiedliche Verhältnisse oxidativer und reduktiver Oberflächenzentren, durch unterschiedliche katalytische Aktivitäten und durch unterschiedliche Austrittsarbeiten auszeichnen und so verschiedene Gasselektivitäten erreicht werden können. Die meisten Sensormaterialien wie z.B. SnO₂ sind Oxidationskatalysatoren und oxidieren brennbare Gase wie z.B. Kohlenwasserstoffe, die dann als positive Ionen detektiert werden. Eine weitere vorteilhafte Ausbildung der Erfindung sieht vor, dass der Abstand zwischen der Sensorfläche sowie der Elektrode des Oberflächenionisationssensors zwischen 0,3 und 3,0 mm, besonders bevorzugt im Bereich von 0,5 - 1,5 mm, beträgt.

Eine andere vorteilhafte Weiterbildung der Erfindung sieht vor, dass die zwischen der Sensorfläche und der Elektrode angelegte Spannung zwischen 100 und 1000 Volt liegt, wobei die Sensorfläche vorzugsweise positiv gepolt ist und so positive Analytgasionen detektiert werden..

Es ist jedoch auch möglich, die Sensorfläche negativ zu polen, um so negative Analytgasionen zu bilden und zu detektieren. Natürlich weist in beiden Fällen die Gegenelektrode die jeweils umgekehrte Polung auf.

Gemäß der Erfindung ist die Sensorfläche des resistiven Sensors und die des Oberflächenionisationssensors identisch, die Sensorfläche ist an einer Seite sowohl mit der Widerstandsmessschaltung zur resistiven Messung als auch mit der Strommessschaltung zwischen Sensorfläche und Elektrode verbunden.

Eine vorteilhafte Weiterbildung der Erfindung sieht vor, dass der Sensor aus mehreren Einzelsensoren besteht, die matrixartig in Form eines Arrays angeordnet sind. Z.B. könnte ein 3x3 Array von 9 Einzelsensorflächen verwendet werden, wobei jede Sensorfläche Maße von etwa 2mm x 2mm aufweist. Es bieten sich mikromechanisch hergestellte Hotplate-Chips auf SOI (Silicon On Insulator) Basis an, die sich durch günstige Herstellkosten und geringen Heizleistungsverbrauch auszeichnen.

Eine bevorzugte Weiterbildung der Erfindung sieht vor, dass die Einzelsensoren Sensoroberflächen unterschiedlicher Materialen aufweisen. So können einzelne aus Metalloxid, anderen Halbleitermaterialien, insbesondere GaN, AlN, SiC, Diamant bzw. aus Edelmetallen oder Edelmetalllegierungen, insbesondere aus Pt, Pd, Re, bestehen. Dadurch lassen sich für unterschiedliche zu detektierende Stoffe geeignete Sensitivitäten bewirken.

Noch eine Weiterbildung der Erfindung sieht vor, dass die Einzelsensoren separate Heizvorrichtungen aufweisen und auf unterschiedliche Temperaturen beheizbar sind. Auch dadurch lassen sich für unterschiedliche zu detektierende Stoffe geeignete Sensitivitäten bewirken. Beispielsweise werden bei höheren Temperaturen sämtliche Kohlenwasserstoffe detektiert, während bei immer niedriger werdenden Temperaturen einzelne funktionelle Kohlenwasserstoffe aussortiert werden. Im Falle positiver Ionisierung weisen die Kohlenwasserstoffe mit hohen Protonenaffinitäten wesentlich höhere Ionisationseffizienzen auf und bei niedrigeren MOX Temperaturen sind dann nur noch diese nachweisbar.

Vorzugsweise weisen die Sensorflächen eine Oberflächentemperatur von etwa 400°C bis 550°C auf.

Erfindungsgemäß beansprucht wird auch die Verwendung der beschriebenen Sensorvorrichtung zur selektiven Bestimmung des Vorhandenseins von Kohlenwasserstoffen mit funktionellen Amino-Gruppen, insbesondere Dimethylanilin oder Dibutylamin und somit unter anderem auch Drogen auf Amphetamin Basis wie "Speed" (Alphamethylphenylethylamin) und "Ecstasy" (3,4- methylendioxy-N-methylamphetamin).

Die Erfindung wird nachfolgend anhand bei gefügten Zeichnungen mehr erläutert. Dabei zeigt:
- Figur 1:: eine schematische Anordnung einer Sensormessvorrichtung gemäß der Erfindung;
- Figur 2a:: eine Ansicht eines Sensorelements auf Keramik Basis
- Figur 2b:: eine Ansicht eines Sensorelements auf Silizium Basis
- Figur 3:: eine Anzahl von Diagrammen zu verschiedenen Messbedingungen.

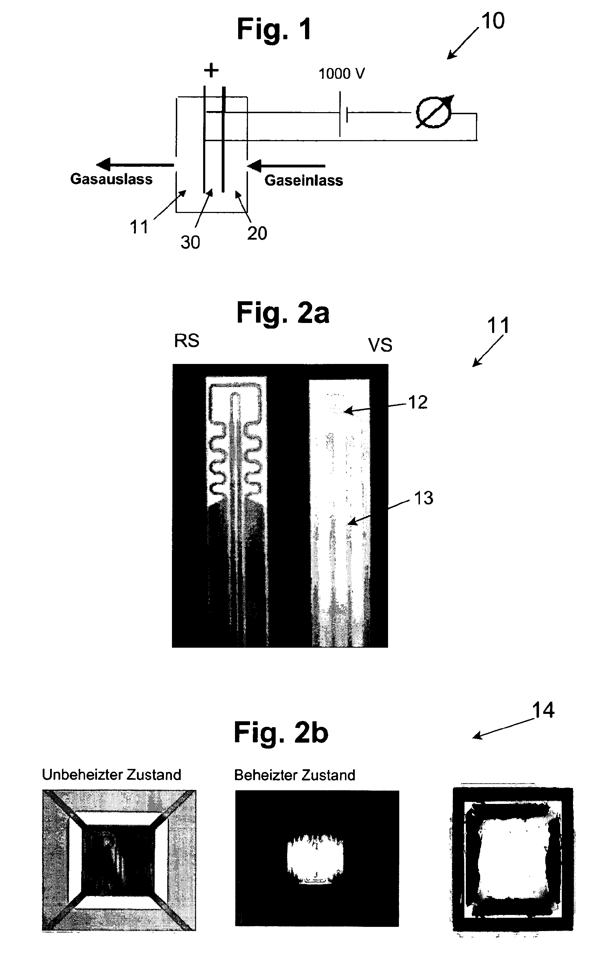

Fig.1 zeigt eine Sensor-Messvorrichtung **10,** die im wesentlichen aus einem Anode(+) - Katode(-) -Aufbau besteht. Die Anode ist hier ein keramisches Sensorelement **11** (Fig.2a). Auf der Rückseite (RS), also der Gegenelektrode **20** abgewandten Seite, befindet sich ein Heizmäander zum Heizen und ein Widerstandsthermometer zur Temperaturregelung. Mittels dieser Heizvorrichtung wird die eigentliche Sensorfläche auf der Vorderseite (VS) auf eine Temperatur im Bereich von 400 - 500 °C geheizt und konstant gehalten. Auf der Vorderseite, also der Gegenelektrode zu gewandten Seite, ist die eigentliche gassensitive Emitterschicht als Dünnfilm **12** aufgebracht sowie deren Kontaktierungen **13.** Gegenüber der Sensorschicht befindet sich die Gegenelektrode **20,** die aus vergoldetem V2A Stahl besteht, hier als Kathode gepolt. Der Abstand **30** zwischen Anode und Kathode beträgt < 1 mm und die angelegte Spannung zwischen 200 und 1000 V. Die beheizte Sensorschicht **12** wird dann einmal resistiv als Widerstandsmessung über die Sensorschicht und einmal als Oberflächenionisations - Strommessung über den Anode -Katode - Aufbau ausgelesen.

In Fig. 2b ist ein mikromechanisch hergestelltes Sensorelement dargestellt **14**. Auf der Rückseite des Chips befinden sich wieder Heizmäander und Temperatursensor und auf der Vorderseite befindet sich wieder die eigentliche Sensorschicht. Dieser thermisch isolierte Hotplate Chip ist insgesamt nur 5 x 5 mm groß, sehr heizleistungsarm, kostengünstig und über einen SOI (silicon on insulator) Prozess auf Wafer-Ebene hergestellt.

Im Betrieb wird der Raum bzw. Spalt **30** zwischen Sensorfläche **12** und Gegenelektrode **20** mit Analytgas beströmt. Die Gasmoleküle treffen auf die Sensorfläche 12, werden dort adsorbiert und mit adsorbierten Sauerstoffionen findet eine Verbrennungsreaktion statt, die zu neutralen und desorbierten Verbrennungsprodukten führt und zu einer Widerstandsänderung der sensitiven Schicht (Selektivitätskriterium für Analytgase ist Brennbarkeit). Analytgase, z.B. Funktionelle Kohlenwasserstoffe, werden ferner an der positiv geladenen Sensorfläche **12** über Ladungstransferreaktionen zwischen adsorbierten Gasmolekülen und der Sensorfläche ionisiert, und die Ionen werden aufgrund des, wegen der hohen Spannung zwischen Sensorfläche **12** und Gegenelektrode **20,** starken elektrischen Feldes zur Gegenelektroden **20** bewegt, wo deren Ankunft als Stromsignal detektiert wird. (Selektivitätskriterium für Analytgase sind deren funktionelle Gruppen).

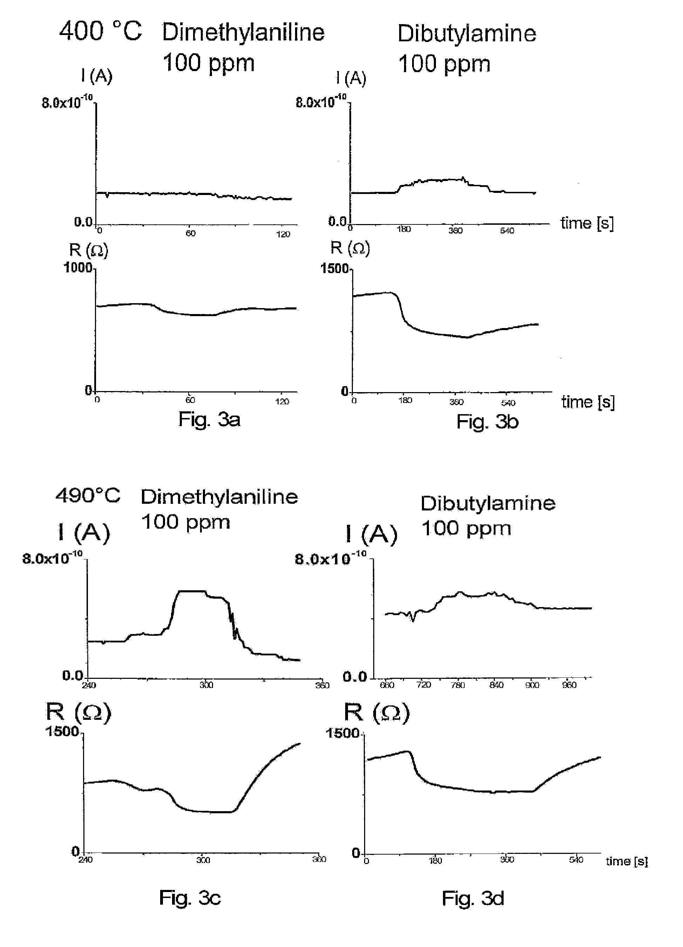

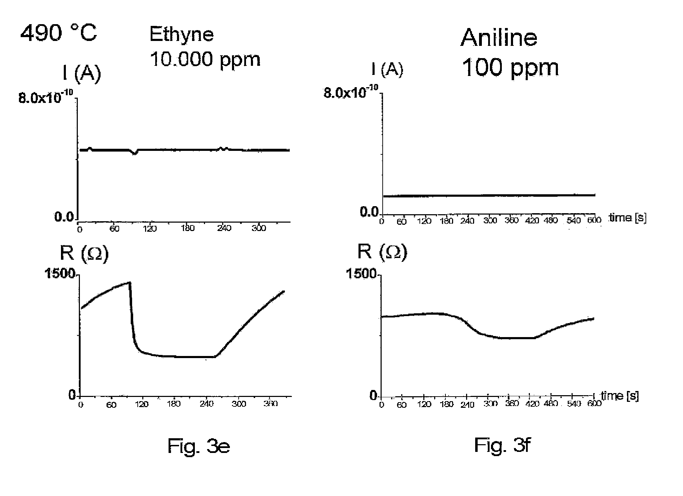

In Fig. 3 sind mehrere Diagramm-Gruppen dargestellt für die Messergebnisse unter unterschiedlichen Bedingungen. In allen Fällen besteht die Sensorfläche **12** aus einem SnO₂-Dünnfilm. Es gehören jeweils zwei übereinander stehende Diagramme zusammen und zwar zeigt das obere Diagramm den Messausschlag des Oberflächenionisationssensors und das untere Diagramm den Messausschlag des resistiven Sensors.

Fig. 3a zeigt die Erfassung von Dimethylanilin in einer Konzentration von 100 ppm in Umgebungsluft, wobei die Sensortemperatur 400°C beträgt. Es zeigt sich in dem oberen Diagramm kein Ausschlag, also keine Gasdetektion. In Fig. 3b zeigt bei Dibutylamin in gleicher Konzentration das obere Diagramm ein Sensorsignal, dieses Gas ist also bereits bei dieser niedrigen Sensortemperatur mittels Oberflächenionisation erfassbar. Hingegen die unteren Diagramme zeigen bei beiden Gasen eine Resisistivitätsänderung an.

Die Diagramme 3c - 3f weisen alle eine Sensortemperatur von 490°C auf. Gemäß Fig. 2c lässt sich bei dieser Temperatur im Gegensatz zur niedrigeren Temperatur von 400°C gemäß Fig. 3a eindeutig ein klarer Ausschlag in beiden Diagrammen feststellen und damit eine Erfassung von Dimethylanilin. Gleiches gilt für Fig. 3d für die Erfassung von Dibutylamin.

Zu Kontrollzwecken wurde unter den gleichen Bedingungen wie in Fig. 3c und 3d Ethin in einer Konzentration von 10.000 ppm bzw. Anilin bei 100 ppm durch die erfindungsgemäße Vorrichtung geleitet wobei in beiden Fällen kein Ausschlag bei dem Oberflächenionisationssensor erfolgte. Dies belegt die Selektivität der erfindungsgemäßen Anordnung. Im Temperaturbereich von 400 °C - 500 °C sind Kohlenwasserstoffe mit Aminogruppen über Oberflächenionisation selektiv dahingehend detektierbar, dass mit niedriger werdender Sensortemperatur Analytgase mit immer höheren Protonenaffinitätswerten selektiert werden. Eine resistive Response hingegen tritt bei allen Kohlenwasserstoffen auf.

## Patentansprüche

1. Sensorvorrichtung zur selektiven Ermittlung von geringen Konzentrationen an funktionellen Kohlenwasserstoffen in der Gasphase mit mindestens einem beheizbaren resistiven Sensor, der eine resistive Sensorschicht (12) aufweist, und mindestens einem beheizbaren Oberflächenionisationssensor, der eine Sensorfläche und eine dazu beabstandete Gegenelektrode (20) umfasst, zwischen denen ein elektrisches Feld besteht, wobei die Sensorschicht (12) des resistiven Sensors mit der Sensorfläche des Oberflächenionisationssensors identisch ist.

2. Sensorvorrichtung nach Anspruch 1, dadurch gelcennzeichnet, dass die resistive Sensorschicht (12) im Wesentlichen aus MoO₃ oder SnO₂ besteht.

3. Sensorvorrichtung nach Anspruch 1, **dadurch gekennzeichnet, dass** die resistive Sensorschicht (12) ein Halbleiter ist.

4. Sensorvorrichtung nach Anspruch 1, **dadurch gekennzeichnet, dass** der Abstand zwischen der Sensorfläche und der Gegenelektrode (20) zwischen 0,3 und 3,0 mm, vorzugsweise von 0,5 - 1,5 mm, beträgt.

5. Sensorvorrichtung nach einem der Ansprüche 1 bis 4, **dadurch gekennzeichnet, dass** die zwischen der Sensoroberfläche und der Gegenelektrode (20) angelegte Spannung 100 - 1000 V beträgt, wobei die Sensorfläche vorzugsweise positiv gepolt ist.

6. Sensorvorrichtung nach einem der Ansprüche 1 bis 5, **dadurch gekennzeichnet, dass** sie aus mehreren Einzelsensoren besteht.

7. Sensorvorrichtung nach Anspruch 6, **dadurch gekennzeichnet, dass** die Einzelsensoren matrixartig angeordnet sind.

8. Sensorvorrichtung nach Anspruch 6, **dadurch gekennzeichnet, dass** die Einzelsensoren Sensorflächen aus unterschiedlichen Materialen aufweisen.

9. Sensorvorrichtung nach Anspruch 6, **dadurch gekennzeichnet, dass** die Einzelsensoren separate Heizvorrichtungen aufweisen und auf unterschiedliche Temperaturen beheizbar sind.

10. Sensorvorrichtung nach Anspruch 6, **dadurch gekennzeichnet, dass** die Sensorflächen Oberflächentemperaturen im Bereich von 400 bis 550°C, vorzugsweise von 400°C bis 500°C, aufweisen.

11. Verwendung der Sensorvorrichtung nach einem der vorherigen Ansprüche zur selektiven Bestimmung des Vorhandenseins von Kohlenwasserstoffen mit funktionellen Amino-Gruppen, insbesondere Dimethylanilin oder Dibutylamin oder Drogen auf Amphetaminbasis.

## Claims

1. A sensor device for selectively detecting low concentrations of functional hydrocarbons in the gas phase, having at least one resistive sensor which can be heated and which has a resistive sensor layer (12), and having at least one heatable surface ionisation sensor which comprises a sensor surface and a counter electrode (20) spaced apart therefrom, between which an electric field exists, wherein the sensor layer (12) of the resistive sensor is identical to the sensor surface of the surface ionisation sensor.

2. The sensor device according to claim 1, **characterized in that** the resistive sensor layer (12) consists substantially of MoO₃ or SnO₂.

3. The sensor device according to claim 1, **characterized in that** the resistive sensor layer (12) is a semiconductor.

4. The sensor device according to claim 1, **characterized in that** the distance between the sensor surface and the counter electrode (20) has a value between 0.3 and 3.0 mm, preferably from 0.5 - 1.5 mm.

5. The sensor device according to any one of claims 1 to 4, **characterized in that** the voltage applied between the sensor surface and the counter electrode (20) is 100 - 1000V, wherein the sensor surface preferably has a positive polarity.

6. The sensor device according to any one of claims 1 to 5, **characterized in that** it consists of a plurality of individual sensors.

7. The sensor device according to claim 6, **characterized in that** the individual sensors are arranged in a matrix.

8. The sensor device according to claim 6, **characterized in that** the individual sensors comprise sensor surfaces made of different materials.

9. The sensor device according to claim 6, **characterized in that** the individual sensors comprise separate heating devices and can be heated to different temperatures.

10. The sensor device according to claim 6, **characterized in that** the sensor surfaces have surface temperatures in the range of 400 to 550°C, preferably from 400°C to 500°C.

11. Use of the sensor device according to any one of the previous claims for selectively determining the presence of hydrocarbons with functional amino groups, in particular dimethylaniline or dibutylamine or drugs based on amphetamine.

## Revendications

1. Dispositif de détection pour la détermination sélective de faibles concentrations d'hydrocarbures fonctionnels en phase gazeuse, avec au moins un capteur résistif pouvant être chauffé, lequel présente une couche de détection résistive (12), et au moins un capteur à ionisation de surface pouvant être chauffé, lequel comprend une surface de détection et une contre-électrode (20) espacée par rapport à celle-ci, entre lesquels il existe un champ électrique, la couche de détection (12) du capteur résistif étant identique à la surface de détection du capteur à ionisation de surface.

2. Dispositif de détection selon la revendication 1, **caractérisé en ce que** la couche de détection résistive (12) se compose essentiellement de MoO₃ ou de SnO₂.

3. Dispositif de détection selon la revendication 1, **caractérisé en ce que** la couche de détection résistive (12) est un semi-conducteur.

4. Dispositif de détection selon la revendication 1, **caractérisé en ce que** la distance entre la surface de détection et la contre-électrode (20) est comprise entre 0,3 et 3,0 mm, de préférence entre 0,5 - 1,5 mm.

5. Dispositif de détection selon l'une des revendications 1 à 4, **caractérisé en ce que** la tension appliquée entre la surface de détection et la contre-électrode (20) est de 100 - 1000 V, la surface de détection étant de préférence de polarité positive.

6. Dispositif de détection selon l'une des revendications 1 à 5, **caractérisé en ce qu'**il se compose de plusieurs capteurs individuels.

7. Dispositif de détection selon la revendication 6, **caractérisé en ce que** les capteurs individuels sont disposés à la manière d'une matrice.

8. Dispositif de détection selon la revendication 6, **caractérisé en ce que** les capteurs individuels présentent des surfaces de détection se composant de différents matériaux.

9. Dispositif de détection selon la revendication 6, **caractérisé en ce que** les capteurs individuels présentent des dispositifs de chauffage distincts et peuvent être chauffés à des températures différentes.

10. Dispositif de détection selon la revendication 6, **caractérisé en ce que** les surfaces de détection présentent des températures de surface dans la plage de 400 à 550°C, de préférence de 400°C à 500°C.

11. Utilisation du dispositif de détection selon l'une des revendications précédentes pour la détermination sélective de la présence d'hydrocarbures avec des groupes amino fonctionnels, en particulier de la diméthylaniline ou du dibutylamine ou des drogues à base d'amphétamines.
